**Europäisches Patentamt**

**European Patent Office**

**Office européen des brevets**

(19)

(11) Veröffentlichungsnummer: **0 032 996**
**B1**

(12)

# EUROPÄISCHE PATENTSCHRIFT

(45) Veröffentlichungstag der Patentschrift:
**15.02.84**

(51) Int. Cl.³: **C 08 L 61/02**, C 08 L 1/10

(21) Anmeldenummer: **80107702.5**

(22) Anmeldetag: **06.12.80**

(54) Thermoplastische Formmassen aus Celluloseestern.

(30) Priorität: **21.12.79 DE 2951747**

(43) Veröffentlichungstag der Anmeldung:
**05.08.81 Patentblatt 81/31**

(45) Bekanntmachung des Hinweises auf die Patenterteilung:
**15.02.84 Patentblatt 84/7**

(84) Benannte Vertragsstaaten:
**AT BE DE FR GB IT NL**

(56) Entgegenhaltungen:
**Keine**

(73) Patentinhaber: **BAYER AG, Zentralbereich Patente, Marken und Lizenzen, D-5090 Leverkusen 1, Bayerwerk (DE)**

(72) Erfinder: **Alberts, Heinrich, Dr., Morgengraben 16, D-5000 Koeln 80 (DE)**
Erfinder: **Fischer, Winfried, Dr., An der Joch 36, D-5000 Koeln 80 (DE)**
Erfinder: **Müller, Friedemann, Dr., Hardenbergstrasse 13, D-4040 Neuss 21 (DE)**
Erfinder: **Peters, Horst, Dr., Winterberg 25, D-5090 Leverkusen 3 (DE)**
Erfinder: **Leuschke, Christian, Ing.grad., Neckarstrasse 36, D-4047 Dormagen (DE)**
Erfinder: **Baasch, Hans-Peter, August-Kierspel-Strasse 161, D-5060 Bergisch Gladbach 2 (DE)**

### Thermoplastische Formmassen aus Celluloseestern

Die Erfindung betrifft thermoplastische Formmassen aus organischen Celluloseestern und durch Pfropfreaktion mit Vinylmonomeren, insbesondere mit ungesättigten Estern modifizierten Ethylen-Vinylestercopolymerisaten.

Formmassen aus Celluloseacetat können ohne Zusatz von Weichmachern nicht thermoplastisch verarbeitet werden, da sich dieser Ester vor dem Erweichen zu zersetzen beginnt. Auch bei Celluloseacetopropionaten und -acetobutyraten liegen die Erweichungs- und Zersetzungstemperatur so nahe beieinander, dass auch diese Formmassen vor ihrer thermoplastischen Verarbeitung mit Weichmachern abgemischt werden müssen. Damit erreicht man die notwendige Herabsetzung der Verarbeitungstemperatur und Verarbeitungsviskosität.

Als Weichmacher für organische Celluloseester dienen vornehmlich aliphatische Ester der Phthalsäure, Adipinsäure, Azelainsäure, Sebacinsäure und Phosphorsäure wie beispielsweise Dimethylphthalat, Diethylphthalat, Dibutyladipat, Dioctyladipat, Dibutylacelat, Trichlorethylphosphat und Tributylphosphat. Oft ist es auch vorteilhaft, Weichmachergemische einzusetzen.

Obwohl die mit Weichmachern modifizierten Celluloseesterformmassen eine sehr gute Transparenz zeigen, wäre es wünschenswert, für manche Anwendungszwecke ihre Wärmeformbeständigkeit weiter zu verbessern. Ausserdem wandern die Weichmacher mit der Zeit an die Oberfläche der Formkörper, so dass z.B. Folien aus modifizierten Celluloseestern nicht zur Verpackung von bestimmten Lebensmitteln verwendet werden können.

Aus der deutschen Ausgelegschrift 1 303 219 sind Abmischungen aus organischen Celluloseestern, niedermolekularen Weichmachern und Olefinpolymerisaten bekannt. Bei einem höheren Gehalt an Olefinpolymerisaten sind jedoch solche Formmassen nicht mehr transparent. Ausserdem dienen hier herkömmliche niedermolekulare Ester mit den bekannten Nachteilen als Weichmacher.

Die Verwendung polymerer Weichmacher für Cellulosemischester ist ebenfalls bekannt. In der US-Patentschrift 3 682 850 werden thermoplastische Mischungen aus 40-90 Gew.-% Celluloseestern und 10-60 Gew.-% eines Ethylen-Vinylacetatcopolymeren mit einem Vinylacetatgehalt von 75-99 Gew.-% beschrieben, die durch gute mechanische Festigkeitswerte und hohe Transparenz gekennzeichnet sind.

Aus der Deutschen Offenlegungsschrift 2 426 178 sind ferner transparente thermoplastische Formmassen aus organischen Celluloseestern und Ethylen-Vinylestercopolymeren bekannt. Die eingesetzten Ethylen-Vinylestercopolymeren enthalten 30-98, vorzugsweise 60-98 Gew.-% eingebauten Vinylester.

Mischungen aus Cellulosemischestern und Ethylen-Vinylestercopolymeren mit weniger als 75 Gew.-% an eingebautem Vinylester in der Ethylencopolymerisatkomponente sind in bestimmten Grenzen transparent, weisen aber mit steigendem Gewichtsanteil des Ethylenvinylestercopolymeren in der Abmischung eine zunehmende Neigung zu Weissbruch (Crazing) bei Biege- oder Dehnungsbeanspruchung auf.

Diese Minderung der Transparenz ist für spezielle Anwendungen unerwünscht. Die nicht ausreichende Verträglichkeit der Polymeren erschwert zugleich die Herstellung weicher, flexibler Formmassen, die auch unter extremer Dehnungs- oder Biegebeanspruchung hohe Transparenz ohne Weissbruch aufweisen sollen.

Es wurde nun gefunden, dass die vorerwähnten Nachteile überwunden und hochtransparente, weiche und flexible Formmassen auf der Basis von organischen Celluloseestern und Ethylen-Vinylestercopolymeren mit bis zu 75 Gew.-% eingebautem Vinylester erhalten werden, wenn Celluloseester aliphatischer Carbonsäuren mit Pfropfprodukten aus ungesättigten Estern und Ethylen-Vinylestercopolymeren abgemischt werden.

Gegenstand der Erfindung sind somit thermoplastische Formmassen, bestehend im wesentlichen aus

1) 1-99, vorzugsweise 40-95 Gew.-% eines Celluloseesters einer oder mehrerer aliphatischer $C_1$-$C_5$-Carbonsäuren und

2) 99-1, vorzugsweise 5-60 Gew.-% eines Pfropfpolymerisates, aus

   a) 5-90 Gew.-% eines Ethylen-Vinylestercopolymerisats mit 5-75 Gew.-% eingebautem Vinylester als Pfropfsubstrat und polymerisierten Einheiten von

   b) 10-95 Gew.-% Vinylestern und/oder Alkylestern der Acryl- und/oder Methacrylsäure und

   c) 0-20 Gew.-% $C_2$-$C_4$-$\alpha$-Olefinen, wobei die Summe der Komponenten 1) und 2) und a) bis c) stets 100 Gew.-% beträgt.

Geeignete Celluloseester zur Herstellung der erfindungsgemässen Formmassen sind Celluloseester aliphatischer Carbonsäuren mit 1-5 C-Atomen, vorzugsweise Celluloseacetat, -acetopropionat und -acetobutyrat.

Die Verfahren zur Herstellung von organischen Celluloseestern sind seit langem bekannt und werden beispielsweise in Ullmanns Encyklopädie der technischen Chemie (Verlag Urban u. Schwarzenberg, München-Berlin, 1963) im 5. Band auf den Seiten 182 bis 201 beschrieben.

Bevorzugte Celluloseacetobutyrate enthalten 40 bis 50 Gew.-% Buttersäuregruppen und 15 bis 26 Gew.-% Essigsäuregruppen.

Besonders bevorzugt für die erfindungsgemässen Formmassen eignen sich Celluloseacetobutyrate mit folgender Zusammensetzung:
42 bis 46 Gew.-% Buttersäuregruppe und 18 bis 22 Gew.-% Essigsäuregruppen

Bevorzugte Celluloseacetopropionate enthalten im allgemeinen
50 bis 66 Gew.-% Propionsäuregruppen und 4 bis 12 Gew.-% Essigsäuregruppen

und besonders bevorzugte Celluloseacetopropionate haben folgende Zusammensetzung:

54 bis 60 Gew.-% Propionsäuregruppen und

4 bis 9 Gew.-% Essigsäuregruppen.

Von den Celluloseacetaten werden bevorzugt Sekundär-Celluloseacetate eingesetzt.

Die relativen Viskositäten ($\eta_{rel}$) von 2 Gew.-%igen Lösungen der verwendeten aliphatischen Celluloseester in Aceton liegen bei 20°C zwischen 2,5 und 6,0, bevorzugt zwischen 3,5 und 5,0.

Die als Pfropfsubstrat dienenden Ethylen-Vinylester-Copolymerisate werden nach den bekannten Verfahren der Hoch- oder Mitteldrucksynthese, gegebenenfalls in Lösungsmitteln wie tert.-Butanol, hergestellt.

Als Vinylester kommen organische Vinylester von gesättigten, gegebenenfalls durch Halogen, insbesondere durch Chlor, substituierten aliphatischen Monocarbonsäuren mit 1-18 C-Atomen oder aromatischen Monocarbonsäuren mit 7-11 C-Atomen in Frage. Namentlich seien genannt: Vinylformiat, Vinylacetat, Vinylpropionat, Vinylchlorpropionat, Vinylbutyrat, Vinylcapronat, Vinyllaurinat, Vinylmyristinat, Vinylstearat, Vinylbenzoat, vorzugsweise Vinylacetat.

Die nach dem Verfahren der Hochdrucksynthese hergestellten Ethylen-Vinylester-Copolymerisate besitzen Schmelzindexwerte — nach DIN 53 735 bei 190°C und einer Belastung von 2,16 kp — zwischen 0,1 und 100, vorzugsweise zwischen 1,0 und 10, insbesondere von 3,5 bis 6. Die in Tetralin bei 120°C gemessenen Granzviskositäten [$\eta$] liegen im allgemeinen zwischen 0,6 und 1,5 [dl/g]. Die nach der Methode der Lichtstreuung ermittelten Molekulargewichte liegen vorzugsweise zwischen 50 000 und 1 Million. Die nach der Beziehung $M_w/M_n$ - 1 definierte Uneinheitlichkeit U [G. Schulz, z. phys. Chem. (B) 43 (1939) Seiten 25-34] liegt im Bereich von 5 bis 30. Diese Copolymerisate sind im Kohlenwasserstoffen oder Alkoholen löslich.

Die beispielsweise nach dem Verfahren der Lösung- oder Emulsionspolymerisation hergestellten Ethylen-Vinylester-Copolymerisate, die 5 bis 75 Gew.-% Vinylester, vorzugsweise 25 bis 55 Gew.-% Vinylester enthalten, besitzen Schmelzindexwerte bei 190°C und einer Belastung von 2,16 kp, die grösser als 100 sein können, vorzugsweise liegt der Schmelzindexbereich unter 15, insbesondere zwischen 0,5 und 5. Die mittels Lichtstreuung gemessenen Molekulargewichte liegen vorzugsweise zwischen 40 000 und einer Million. Die Uneinheitlichkeit U beträgt 1 bis 6. Die Copolymerisate sind löslich in Kohlenwasserstoffen und Alkoholen und besitzen vorzugsweise Grenzviskositäten [$\eta$] zwischen 0,5 und 2,5 [dl/g] in Toluol.

Als Monomere zur Herstellung der Pfropfpolymerisate werden in erster Linie Vinylester und/oder Alkylester der (Meth)Acrylsäure eingesetzt. Geeignet sind die $C_1$-$C_{14}$-, vorzugsweise die $C_1$-$C_4$-Alkylester der Acryl- und/oder Methacrylsäure wie Methyl(meth)acrylat, Ethyl(meth)acrylat, n-Propyl- und Isopropyl(meth)acrylat, n-Butyl- und Isobutyl(meth)acrylat und 2-Ethyl-hexyl(meth)acrylat. Geeignete Vinylester sind die bereits weiter oben beschriebenen Vinylester aliphatischer oder aromatischer Monocarbonsäuren, vorzugsweise Vinylacetat.

Weitere geeignete Monomere sind $C_2$-$C_4$-$\alpha$-Olefine wie Ethylen, Propylen und Isobutylen sowie gegebenenfalls Acrylsäure und Methacrylsäure.

Falls keine transparenten Pfropfcopolymeren gewünscht werden, können auch Vinylaromaten wie Styrol oder $\alpha$-Methyl-styrol, gegebenenfalls in Abmischung mit den (Meth)Acrylestern eingesetzt werden.

Die Pfropfpolymerisation wird in Lösung oder in Masse durchgeführt. Als Lösungsmittel seien genannt:

Kohlenwasserstoffe wie Benzol, Toluol, Xylol, Alkohole wie Methanol. Ethanol, Propanol, iso-Propanol, n-Butanol, tert.-Butanol, chlorierte Kohlenwasserstoffe wie Chlorbenzol, Methylenchlorid, Tetrachlorethylen, Essigsäuremethyl-, -ethyl- oder -butylester und Eisessig oder ihre Gemische.

Die Pfropfpolymerisation wird bevorzugt in homogener Phase durchgeführt, kann aber prinzipiell auch in heterogener Phase erfolgen. Es ist auch durchaus möglich, zunächst eine homogene Phase aus Pfropfsubstrat, Vinylmonomeren und gegebenenfalls Lösungsmittel herzustellen, die Lösung in Wasser zu dispergieren und dann, gegebenenfalls nach Zusatz eines Katalysators, zu polymerisieren.

Die Pfropfreaktion kann auch mit oder ohne Lösungsmittel in Polymerisationsschnecken durchgeführt werden, und das Abdampfen des Lösungsmittels oder der Restmonomeren aus dem Pfropfpolymerisationsansatz in Ausdampfschnecken, Dünnschichtverdampfern oder Sprühtrocknern erfolgen.

Die Polymerisation wird bei Temperaturen zwischen −20°C und +250°C, vorzugsweise von +30°C bis +180°C und bei Drücken zwischen Normaldruck bis 300 bar, vorzugsweise bis 25 bar durchgeführt.

Die Polymerisationskatalysatoren können vor, während oder nach dem Löse- bzw. Mischvorgang dem Polymerisationsansatz zugefügt werden. Vorzugsweise werden die Katalysatoren nach Herstellung der homogenen Pfropfsubstratlösung mit den Monomeren oder getrennt von den Monomeren in die Reaktionsmischung eingetragen.

Die Polymerisationskatalysatoren werden zweckmässigerweise in einer Menge von 0,001 bis 2 Gew.-%, bezogen auf die Summe von Pfropfsubstrat und Pfropfmonomeren eingesetzt. Diese Mengen können selbstverständlich weit überschritten werden.

Als Polymerisationskatalysatoren können Per- oder Azoverbindungen oder Radikale liefernde hochsubstituierte Ethanderivate wie z.B. Benzpinakol verwendet werden. Beispielhaft seien genannt: Benzoylperoxid, tert.-Butylperpivalat, Lauroylperoxid, tert.-Butyperoctoat, tert.-Butylperbenzoat, di-tert.-Butylperoxid, tert.-Butylperisononanat, Diisopropylpercarbonat, Dicyclohexylpercarbonat, Dicumylperoxid, tert.-Butylperneodecanoat, Azobisisobuttersäurenitril oder Ester der Azobisisobuttersäure wie z.B. deren Bis-ethylester.

Initiatorradikale können ferner mit bekannten Redoxsystemen oder auch mit Hilfe von UV-Strahlung, aktinischem Licht oder beschleunigten Elektronen erzeugt werden.

Die erfindungsgemässen (bzw. erfindungsgemäss hergestellten) Formmassen können gegebenenfalls noch mit niedermolekularen Weichmachern modifiziert werden.

Geeignete niedermolekulare Weichmacher sind Dimethylphthalat, Diethylphthalat, Triphenylphosphat, Methylethylenglykolphthalat, Di-n-butylsebacat, Ethyl-butylenglykol-phthalat, Butyl-butylenglykol-phthalat, Dibutylphthalat, Dioctyladipat, Dioctylphthalat, Butylbenzylphthalat und Triacetin.

Die erfindungsgemässen Formmassen können ausserdem Additive enthalten, z.B. um die Polymermischungen zu färben, zu pigmentieren, um ihre Oxidations- oder Lichtbeständigkeit zu verbessern oder Entflammbarkeit zu verringern.

Die erfindungsgemässen Formmassen aus Ethylen-Vinylester-Pfropfcopolymerisaten und organischen Celluloseestern zeigen einen bemerkenswerten Anstieg der nach DIN 53 453 gemessenen Kerbschlagzähigkeit. Sie zeichnen sich ausserdem durch eine verbesserte Formbeständigkeit in der Wärme aus, die z.B. nach DIN 53 460 als Vicat-Erweichungstemperatur gemessen wird. Die Vicat-Erweichungstemperaturen liegen bis zu 40°C über den Erweichungstemperaturen der mit niedermolekularen Weichmachern modifizierten Celluloseestern.

Gegenüber diesen herkömmlichen Celluloseester-Formmassen zeigen die erfindungsgemässen Polymermischungen ausserdem noch verbesserte mechanische Eigenschaften wie beispielsweise eine Erhöhung der Härte, der Zugfestigkeit, der Biegefestigkeit und des Elastizitäts-Moduls. Auch tritt der bekannte Effekt der sogenannten Weichmacherwanderung praktisch nicht auf, wodurch solche Formmassen auch beispielsweise für Anwendungen. Die einen Kontakt mit Lebensmitteln schaffen, besonders gut geeignet sind.

Die Abmischungen aus Celluloseestern und Pfropfcopolymeren aus Ethylen-Vinylester-Copolymerisaten gemäss vorliegender Erfindung lassen sich problemlos auf bekannten Extrudern und Spritzgussmaschinen kontinuierlich und diskontinuierlich verarbeiten und zeigen dabei eine gute Fliessfähigkeit.

Es lassen sich Formkörper jeder Art herstellen sowie Acetatseide, Blockacetat, Folienträger für Sicherheitsfilme, Elektroisolierfolien und Lacke. Die verbesserte Heissluft- und Alterungsbeständigkeit der Polymermischungen macht auch ihren Einsatz für Aussenanwendungen möglich.

Die folgenden Beispiele erläutern die Erfindung. Prozentangaben beziehen sich stets auf das Gewicht.

*Herstellung der Pfropfcopolymerisate*

*Beispiel A*

In einer 2-Kessel-Anlage zur kontinuierlichen Polymerisation, die mit 2 je 5-l-Reaktoren mit Kühl/Heizmantel, Vorrichtungen zur Monomer- und Initiatordosierung und Innentemperaturregelung versehen ist, wird bei 70°C Reaktionstemperatur nach folgender Vorschrift polymerisiert: Je Stde. werden die folgenden Lösungen in den Reaktor 1 eingetragen:

*Lösung 1*

0,75 kg Ethylen-Vinylacetat-Copolymerisat (EVA) mit 45% eingebautem Vinylacetat
0,6 kg Vinylacetat und
2,95 kg tert.-Butanol;

*Lösung 2*

0,7 kg Vinylacetat
0,022 kg tert.-Butylperpivalat und
1,5 kg tert.-Butanol.

Nach einer mittleren Verweilzeit von 40-45 Min. im 1. Reaktor und einem mittleren Monomerumsatz von etwa 85% wird der Polymerisatsirup in den 2. Reaktor eingetragen. Die mittlere Verweilzeit im 2. Reaktor beträgt etwa 40 Min. Der Monomerumsatz nach Verlassen des 2. Reaktors liegt bei praktisch 100%. Der Polymerisatsirup wird über eine Ausdampfschnecke aufgearbeitet. Das Pfropfprodukt weist eine Grenzviskosität von $[\eta] = 1,52$ [dl/g] auf und besitzt folgende Zusammensetzung: 36,5% EVA und 63,5% Vinylacetat.

*Beispiel B*

In einem 40-l-Autoklaven wird unter Stickstoff bei 70°C in eine Lösung von 4500 g eines Ethylen-Vinylacetatcopolymeren mit 45% eingebautem Vinylacetat und einer Mooney-Viskosität von 20 in 13 500 g tert.-Butanol eine Lösung von 4000 g Vinylacetat und 16,8 g tert.-Butylperpivalat in 4000 g tert.-Butanol innerhalb von 4 Std. hinzugegeben. Man rührt anschliessend noch 3 Std. bei 70°C nach. Das entstandene Pfropfcopolymerisat wird durch Abstrippen der flüchtigen Anteile auf einer Ausdampfschnecke isoliert. Das Pfropfcopolymerisat enthält 52% Ethylen-Vinylacetatcopolymer und 48% polymerisierte Einheiten aus Vinylacetat. Die in Tetrahydrofuran gemessene Grenzviskosität beträgt $[\eta] = 1,53$ [dl/g].

In Anlehnung an diese Arbeitsvorschrift B werden die in der Tabelle 1 aufgeführten Pfropfcopolymeren C bis H hergestellt.

Tabelle 1

| Beispiel | EVA [%] | Vinylacetat [%] | n-Butylacrylat [%] | Ethylacrylat [%] | $[\eta]$ [dl/g] |
|----------|---------|-----------------|--------------------|------------------|-----------------|
| C | 70 | 30 | — | — | 1,75 |
| D | 45 | 55 | — | — | 1,55 |
| E | 16 | — | — | 84 | 1,04 |
| F | 16 | 84 | — | — | 0,43 |
| G | 12 | 88 | — | — | 1,00 |
| H | 50 | 25 | 25 | — | 1,63 |

*Beispiel J*

Eine wässrige Emulsion eines Ethylen-Vinylacetatcopolymeren (53% Vinylacetat, Mooney-Viskosität 10) mit einem Feststoffgehalt von 47% wird unter Stickstoff mit 1500 g Wasser, 200 g Methylmethacrylat und 50 g einer 8%igen wässrigen Lösung eines mit Natronlauge auf pH 6,5 eingestellten 1:1-Copolymeren von Methacrylsäure und Methylmethacrylat (Dispergator) versetzt und 30 Minuten bei 70°C gerührt. Dann werden gleichzeitig 2 Lösungen innerhalb von 4 Std. hinzugegeben:

*Lösung 1*

50 g der 8%igen Dispergatorlösung, verdünnt mit 1250 g Wasser;

*Lösung 2*

1200 g Methylmethacrylat und 5,0 g tert.-Butylperpivalat.

Anschliessend wird 2 Std. bei 70°C nachgerührt. Das entstandene Perlpolymerisat wird über ein 50 $\mu$ Sieb abfiltriert, mit Wasser gewaschen und im Umluftschrank bei 50°C getrocknet. Man erhält 1500 g eines in Tetrahydrofuran unlöslichen Pfropfpolymeren mit der Zusammensetzung 31% EVA und 69% polymerisierten Einheiten aus Methylmethacrylat.

*Herstellung der Formmassen*

*Beispiele 1 - 9*

Celluloseacetobutyrat mit ca. 45% Buttersäure- und ca. 19% Essigsäuregruppen wird mit den in der Tabelle 2 angegeben Mengen der Pfropfcopolymeren auf einer Walze bei 170°C intensiv vermischt, wobei die Summe beider Komponenten 100% beträgt.

Die Walzfelle werden granuliert und anschliessend bei einer Massetemperatur von 230°C auf einer Spritzgussmaschine zu Prüfkörpern verspritzt.

In Tabellen 2 und 3 bedeuten:

$a_n$ = Schlagzähigkeit nach DIN 53 453 in $[kJ/m^2]$

$a_k$ = Kerbschlagzähigkeit nach DIN 53 453 in $[kJ/m^2]$

Vicat = Erweichungstemperatur in °C nach DIN 53 460, Verfahren B, Kraft 49,05 [N]

$H_k^{30}$ = Kugeldruckhärte nach 30 s nach DIN 54 456 in $[N/mm^2]$.

### Tabelle 2

| Beispiel | Pfropfco-polymerisat | [%] [a] | $a_n$ [kJ/m²] Raumtemp. | −40°C | $a_k$ [kJ/m²] | Vicat [°C] | $H_k^{30}$ [N/mm²] |
|---|---|---|---|---|---|---|---|
| 1 | A | 10 | 92 | 84 | 4,6 | 100 | 80 |
| 2 | A | 20 | 86 | 76 | 10,6 | 89 | 75 |
| 3 | B | 10 | 70 | 54 | 4,2 | 101 | 72 |
| 4 | B | 20 | 79 | 50 | 12,9 | 87 | 64 |
| 5 | E | 10 | 72 | 66 | 4,4 | 92 | 63 |
| 6 | F | 10 | 80 | 52 | 2,3 | 97 | 87 |
| 7 | G | 10 | 87 | 70 | 2,5 | 98 | 88 |
| 8 | H | 10 | 65 | 51 | 9,4 | 99 | 63 |
| 9 | J | 10 | 88 | 78 | 1,7 | 110 | 78 |

[a] bezogen auf Polymermischung

*Beispiele 10 - 15*

Celluloseacetopropionat enthaltend ca. 57,5% Propionsäure- und ca. 5,5% Essigsäuregruppen, wird mit den in der Tabelle 3 angegebenen Mengen der Pfropfcopolymeren auf einer Walze bei 170°C intensiv vermischt, wobei die Summe beider Komponenten 100% beträgt.

Die Walzfelle werden granuliert und anschliessend bei einer Massetemperatur von 230°C auf einer Spritzgussmaschine zu Prüfkörpern vespritzt.

### Tabelle 3

| Beispiel | Pfropfco-polymerisat | [%] [a] | $a_n$ [kJ/m²] Raumtemp. | −40°C | $a_k$ [kJ/m²] | Vicat [°C] | $H_k^{30}$ [N/mm²] |
|---|---|---|---|---|---|---|---|
| 10 | B | 10 | 84 | 75 | 3,2 | 111 | 84 |
| 11 | B | 20 | 73 | 61 | 8,6 | 97 | 74 |
| 12 | E | 10 | 60 | 48 | 3,6 | 105 | 73 |
| 13 | F | 10 | 54 | 51 | 2,1 | 108 | 98 |
| 14 | H | 10 | 73 | 43 | 5,8 | 114 | 69 |
| 15 | J | 10 | 80 | 60 | 2,8 | 124 | 90 |

[a] bezogen auf Polymermischung

**Patentansprüche für die Vertragsstaaten:**
BE, DE, FR, GB, IT, NL

1. Thermoplastischen Formmassen aus Celluloseestern Weichmachern und Olefinpolymerisaten, dadurch gekennzeichnet, dass sie im wesentlichen aus

1) 1-99 Gew.-% eines Cellulseesters einer oder

mehrerer aliphatischer $C_1$-$C_5$-Carbonsäuren mit einer relativen Viskosität $\eta$ zwischen 2,5 und 6,0 und

2) 99-1 Gew.-% eines Pfropfpolymerisats, aus
   a) 5-90 Gew.-% eines Ethylen-Vinylester-Copolymerisats mit 5-75 Gew.-% eingebautem Vinylester als Pfropfsubstrat und polymerisierte Einheiten von
   b) 95-10 Gew.-% Alkylestern der Acryl- und/oder Methacrylsäure und/oder Vinylestern und
   c) 0-20 Gew.-% $C_2$-$C_4$-$\alpha$-Olefinen,

wobei die Summe der Komponenten 1) und 2) und a) bis c) jeweils 100 Gew.-% beträgt, bestehen.

2. Thermoplastische Formmassen nach Anspruch 1 bestehend im wesentlichen aus

1) 1-99 Gew.-% eines Celluloseesters einer oder mehrerer aliphatischer $C_1$-$C_5$-Carbonsäuren mit einer relativen Viskosität $\eta$ zwischen 3,5 und 5,0 und

2) 99-1 Gew.-% eines Pfropfpolymerisats aus
   a) 5-90 Gew.-% eines Ethylen-Vinylacetat-Copolymerisats mit 5-75 Gew.-% eingebautem Vinylacetat als Pfropfsubstrat und polymerisierten Einheiten von
   b) 95-10 Gew.-% $C_1$-$C_4$-Alkylestern der Acryl- und/oder Methacrylsäure und/oder Vinylacetat und
   c) 0-20 Gew.-% $C_2$-$C_4$-$\alpha$-Olefinen,

wobei die Summe der Komponenten 1) und 2) und a) bis c) jeweils stets 100 Gew.-% beträgt.

3. Thermoplastische Formmassen nach Anspruch 1 und 2, bestehend im wesentlichen aus
   1) 40-95 Gew.-% der Komponente 1) und
   2) 60- 5 Gew.-% der Komponente 2),

wobei die Summe der Komponenten 1) und 2) 100 Gew.-% beträgt.

4. Thermoplastische Formmassen nach Anspruch 1-3, enthaltend als Komponente 1) Celluloseacetobutyrat, Celluloseacetopropionat, Celluloseacetat oder deren Mischungen.

## Patentansprüche für den Vertragsstaat: AT

1. Verfahren zur Herstellung thermoplastischer Formmassen aus Celluloseestern, Weichmachern und Olefinpolymerisaten, dadurch gekennzeichnet, dass die Formmassen aus

1) 1-99 Gew.-% eines Celluoseesters einer oder mehrerer aliphatischer $C_1$-$C_5$-Carbonsäuren mit einer relativen Viskosität $\eta$ zwischen 2,5 und 6,0 und

2) 99-1 Gew.-% eines Pfropfpolymerisates, aus
   a) 5-90 Gew.-% eines Ethylen-Vinylester-Copolymerisats mit 5-75 Gew.-% eingebautem Vinylester als Pfropfsubstrat und polymerisierte Einheiten von
   b) 95-10 Gew.-% Alkylestern der Acryl- und/oder Methacrylsäure und/oder Vinylestern und
   c) 0-20 Gew.-% $C_2$-$C_4$-$\alpha$-Olefinen,

wobei die Summe der Komponenten 1) und 2) und a) bis c) jeweils 100 Gew.-% beträgt, durch radikalische Polymerisation der Monomeren b) und gegebenenfalls c) in Gegenwart des Pfropfsubstrates a) in Masse oder in Lösung in homogener oder heterogener Phase und anschliessende Abmischung des erhaltenen Pfropfpolymerisats 2) mit den Celluloseestern 1) hergestellt werden.

2. Verfahren nach Anspruch 1, dadurch gekennzeichnet, dass als Pfropfsubstrat ein Ethylen-Vinylacetat-Copolymerisat und als Pfropfmonomere Vinylacetat und/oder $C_1$-$C_4$-Alkylester der Acryl- und/oder Methacrylsäure und gegebenenfalls $C_2$-$C_4$-$\alpha$-Olefine eingesetzt werden.

3. Verfahren nach Anspruch 1 und 2, dadurch gekennzeichnet, dass
   1) 40-95 Gew.-% der Komponente 1) und
   2) 60- 5 Gew.-% der Komponente 2),

wobei die Summe der Komponenten 1) und 2) 100 Gew.-% beträgt, zur Herstellung der Formmassen eingesetzt werden.

4. Verfahren nach Anspruch 1-3, dadurch gekennzeichnet, dass als Komponente 1) Celluloseacetobutyrat, Celluloseacetopropionat, Celluloseacetat oder deren Mischungen eingesetzt werden.

## Revendications pour les Etats Contractants:
BE, DE, FR, GB, IT NL

1. Matières à mouler thermoplastiques composées d'esters de cellulose, de plastifiants et de polymères oléfiniques, caractérisées en ce qu'elles sont principalement formées

1) de 1 à 99% en poids d'un ester de cellulose d'un ou plusieurs acides carboxyliques aliphatiques en $C_1$ à $C_5$ ayant une viscosité relative $\eta$ comprise entre 2,5 et 6,0 et

2) de 99 à 1% en poids d'un polymère greffé de
   a) 5 à 90% en poids d'un copolymère éthylène-ester de vinyle comprenant 5 à 75% en poids d'ester vinylique incorporé comme substrat de greffage et de motifs polymérisés de
   b) 95-10% en poids d'esters alkyliques de l'acide acrylique et/ou de l'acide méthacrylique et/ou d'esters vinyliques et
   c) 0-20% en poids d'$\alpha$-oléfines en $C_2$ à $C_4$, la somme des composants 1) et 2) et a) à c) s'élevant dans chaque cas à 100% en poids.

2. Matières à mouler thermoplastiques suivant la revendication 1, principalement composées de

1) 1 à 99% en poids d'un ester cellulosique d'un ou plusieurs acides carboxyliques aliphatiques en $C_1$ à $C_5$ ayant une viscosité relative $\eta$ comprise entre 3,5 et 5,0 et

2) 99 à 1% en poids d'un polymère greffé de
   a) 5 à 90% en poids d'un copolymère éthylène-acetate de vinyle avec 5 à 75% en poids d'acetate de vinyle incorporé comme substrat de greffage et de motifs polymérisés de
   b) 95-10% en poids d'esters alkyliques en $C_1$ à $C_4$ de l'acide acrylique et/ou de l'acide méthacrylique et/ou d'acetate de vinyle et
   c) 0-20% en poids d'$\alpha$-oléfines en $C_2$ à $C_4$, la somme des composants 1) et 2) et a) à c) s'élevant dans chaque cas à 100% en poids.

3. Matières à mouler thermoplastiques suivant les revendications 1 et 2, principalement formées de
   1) 40-95% en poids du composant 1) et
   2) 60- 5% en poids du composant 2),

la somme des composants 1) et 2) s'élevant à 100% en poids.

4. Matières à mouler thermoplastiques suivant les revendications 1-3, contenant comme composant 1) de l'acétobutyrate de cellulose, de l'acétopropionate de cellulose, de l'acétate de cellulose ou leurs mélanges.

**Revendications pour l'Etat Contractant: AT**

1. Procédé de production de matières à mouler thermoplastiques formées d'esters de cellulose, de plastifiants et de polymères oléfiniques, caractérisé en ce que les matières à mouler sont produites à partir de

1) 1-99% en poids d'un ester de cellulose d'un ou plusieurs acides carboxyliques aliphatiques en $C_1$ à $C_5$ ayant une viscosité relative $\eta$ comprise entre 2,5 et 6,0 et

2) 99-1% en poids d'un polymère greffé de
   a) 5-90% en poids d'un copolymère éthylène-ester vinylique avec 5-75% en poids d'ester vinylique incorporé comme substrat de greffage et de motifs polymérisés de
   b) 95-10% en poids d'esters alkyliques de l'acide acrylique et/ou de l'acide méthacrylique et/ou d'esters vinyliques et
   c) 0-20% en poids d'α-oléfines en $C_2$ à $C_4$, la somme des composants 1) et 2) et a) à c) s'élevant dans chaque cas à 100% en poids,

par polymérisation radicalaire des monomères b) et, le cas échéant, c) en présence du substrat a) de greffage, dans la masse ou en solution en phase homogène ou hétérogène et mélange subséquent du polymère greffé 2 obtenu avec les esters cellulosiques 1).

2. Procédé suivant la revendication 1, caractérisé en ce qu'on utilise comme substrat de greffage un copolymère éthylène-acétate de vinyle et comme monomères à greffer l'acétate de vinyle et/ou des esters alkyliques en $C_1$ à $C_4$ de l'acide acrylique et/ou de l'acide méthacrylique et, le cas échéant, des α-oléfines en $C_2$ à $C_4$.

3. Procédé suivant les revendications 1 et 2, caractérisé en ce qu'on utilise pour la production des matières à mouler
   1) 40-95% en poids du composant 1) et
   2) 60- 5% en poids du composant 2),
la somme des composants 1) et 2) s'élevant à 100% en poids.

4. Procédé suivant les revendications 1-3, caractérisé en ce qu'on utilise comme composant 1) l'acétobutyrate de cellulose, l'acétopropionate de cellulose, l'acétate de cellulose ou leurs mélanges.

**Claims for the Contracting States:**
BE, DE, FR, GB, IT, NL

1. Thermoplastic moulding compositions of cellulose esters plasticisers and olefin polymers, characterised in that they consist essentially of
1) 1-99% by weight of a cellulose ester of one or more aliphatic $C_1$-$C_5$-carboxylic acids having a relative viscosity $\eta$ between 2.5 and 6.0 and
2) 99-1% by weight of a graft polymer of
   a) 5-90% by weight of an ethylene/vinyl ester copolymer containing 5-75% by weight of incorporated vinyl ester as the graft substrate and polymerised units of
   b) 95-10% by weight of alkyl esters of acrylic and/or methacrylic acid and/or vinyl esters and
   c) 0-20% by weight of $C_2$-$C_4$-α-olefins,
the sum of components 1) and 2) and a) to c) in each case being 100% by weight.

2. Thermoplastic moulding compositions according to claim 1 consisting essentially of
1) 1-99% by weight of a cellulose ester of one or more aliphatic $C_1$-$C_5$-carboxylic acids having a relative viscosity $\eta$ between 3.5 and 5.0 and
2) 99-1% by weight of a graft polymer of
   a) 5-90% by weight of an ethylene/vinyl acetate copolymer containing 5-75% by weight of incorporated vinyl acetate as the graft substrate and polymerised units of
   b) 95-10% by weight of $C_1$-$C_4$-alkyl esters of acrylic and/or methacrylic acid and/or vinyl acetate and
   c) 0-20% by weight of $C_2$-$C_4$-α-olefins,
the sum of components 1) and 2) and a) to c) in each case being 100% by weight.

3. Thermoplastic moulding compositions according to claim 1 and 2, consisting essentially of
   1) 40-95% by weight of component 1) and
   2) 60- 5% by weight of component 2),
the sum of components 1) and 2) being 100% by weight.

4. Thermoplastic moulding compositions according to claim 1-3 containing as component 1) cellulose acetobutyrate, cellulose acetopropionate, cellulose acetate or mixtures thereof.

**Claims for the Contracting State:** AT

1. Process for the production of thermoplastic moulding compositions of cellulose esters, plasticizers and olefin polymers, characterised in that the moulding compositions are produced from
1) 1-99% by weight of a cellulose ester of one or more aliphatic $C_1$-$C_5$-carboxylic acids having a relative viscosity $\eta$ between 2.5 and 6.0 and
2) 99-1% by weight of a graft polymer of
   a) 5-90% by weight of an ethylene/vinyl ester copolymer containing 5-75% by weight of incorporated vinyl ester as the graft substrate and polymerised units of
   b) 95-10% by weight of alkyl esters of acrylic and/or methacrylic acid and/or vinyl esters and
   c) 0-20% by weight of $C_2$-$C_4$-α-olefins,
the sum of components 1) and 2) and a) to c) in each case being 100% by weight, by free radical polymerisation of the monomers b) and, optionally, c) in the presence of the graft substrate a) in bulk or in solution in a homogeneous or heterogeneous phase and subsequently mixing the resulting graft polymer 2 with the cellulose esters 1.

2. Process according to claim 1, characterised in that the graft substrate used is an ethylene/vinyl acetate copolymer and the graft monomer used is vinyl acetate and/or $C_1$-$C_4$-alkyl esters of acrylic and/or

13        **0 032 996**        14

methacrylic acid and, optionally, $C_2$-$C_4$-$\alpha$-olefins.

3. Process according to claim 1 and 2, characterised in that
1) 40-95% by weight of component 1) and
2) 60- 5% by weight of component 2),
the sum of components 1) and 2) being 100% by weight, are used for the production of the moulding compositions.

4. Process according to claim 1-3, characterised in that as component 1) cellulose acetobutyrate, cellulose acetopropionate, cellulose acetate or mixtures thereof are used.